# FASCICULE DE BREVET EUROPEEN

(11) **EP 3 800 094 B1**
(45) Date de publication et mention de la délivrance du brevet: **14.12.2022**
(21) Numéro de dépôt: 20195268.6
(22) Date de dépôt: 09.09.2020
(51) Int. Cl.: B60S 1/48, B60S 1/52, B60S 1/54, B05B 7/00

(54) **DISPOSITIF DE NETTOYAGE DE VITRE DE VÉHICULE**
GLASREINIGUNGSVORRICHTUNG FÜR FAHRZEUG
DEVICE FOR CLEANING A VEHICLE WINDOW

(30) Priorité: 04.10.2019 FR 1911042
(43) Date de publication de la demande: 07.04.2021
(73) Titulaire: Valeo Systèmes d'Essuyage, 78322 Le Mesnil Saint Denis (FR)
(72) Inventeur: JARASSON, Jean-Michel, 78322 LE MESNIL SAINT DENIS (FR); CAILLOT, Gérald, 78322 LE MESNIL SAINT DENIS (FR); IZABEL, Vincent, 78322 LE MESNIL SAINT DENIS (FR)
(74) Mandataire: Valeo Visibility

(56) Documents cités:
- EP-A2- 0 429 831
- DE-A1-102014 118 184
- KR-A- 20150 130 190
- US-A1- 2010 154 844

## Description

a présente invention concerne un dispositif de nettoyage de vitre, et notamment de pare-brise, de véhicule automobile. En particulier, l'invention concerne un dispositif de nettoyage pourvu d'un générateur de mousse, mélangeant le liquide de nettoyage avec de l'air, pour le distribuer sous forme de mousse. Le liquide de nettoyage est alors appliqué sur le pare-brise par des buses placées sur les balais d'essuie-glace du véhicule. Le document DE 10 2014 118184 A1 divulgue un tel dispositif de nettoyage.

Les documents US 2010/154844 A1 et EP 0 429 831 A2 divulguent des dispositifs de nettoyage selon le préambule de la revendication 1.

Les dispositifs de nettoyage de vitre servent à nettoyer les vitres, et surtout le pare-brise du véhicule, de salissures. Ces salissures sont par exemple des projections de boue, des insectes écrasés, de la poussière etc.

Pour ce faire, les dispositifs de nettoyage de vitre distribuent, au moyen de buses, un liquide de nettoyage. Le liquide de nettoyage est généralement à base d'eau, additionnée de surfactants et de produits antigel (méthanol, etc.). En combinaison avec les balais d'essuie-glace, le dispositif de nettoyage maintient la vitre ou le pare-brise propre et transparent pour une meilleure visibilité.

Il est connu de mélanger au liquide de nettoyage une portion d'air, au moyen d'un générateur de mousse, puis de le distribuer sur la vitre sous forme de mousse. Pour distribuer la mousse au plus près des balais d'essuie-glace, lesdits balais peuvent porter des buses, par lesquelles la mousse est émise.

La distribution sous forme de mousse présente l'avantage qu'un niveau de propreté déterminé peut être atteint avec une quantité de liquide moins importante. L'injection d'air sous forme de bulles contribue aussi à la solvatation de saletés grasses, et la pression peut contribuer mécaniquement au nettoyage.

Cependant, si le nettoyage avec de la mousse montre des résultats satisfaisants dans des conditions contrôlées (faibles vitesses, température ni trop élevée, ni trop basse, etc.), des problèmes surviennent dans des conditions pourtant couramment rencontrées au cours de la circulation du véhicule. En effet, la mousse est particulièrement sujette à l'évaporation, au gel, et à un entraînement aérodynamique avec l'air circulant autour du véhicule à vitesse élevée.

Dès lors, il se pose le problème technique de l'amélioration du nettoyage dans les conditions variables et potentiellement extrêmes de circulation du véhicule automobile.

Afin de surmonter au moins partiellement les problèmes précédemment mentionnés, l'invention a pour objet un dispositif de nettoyage de vitre de véhicule, comportant :
- un générateur de mousse (7), configuré pour prélever de l'air et un liquide de nettoyage (L) et mélanger l'air et le liquide de nettoyage (L) et les transformer au moins partiellement en mousse,
- des moyens de régulation (75) du débit d'air prélevé par le générateur de mousse (7),
- une unité de contrôle (9) configurée pour piloter les moyens de régulation (75) du débit d'air en fonction d'au moins un paramètre, caractérisé en ce que les moyens de régulation (75) du débit d'air comportent une pompe à débit contrôlé.

En adaptant le débit d'air et donc la portion de mousse dans le liquide projeté sur la vitre, un nettoyage optimal peut être assuré avec une quantité potentiellement moindre de liquide, et ce dans de nombreuses conditions.

Le dispositif peut en outre présenter une ou plusieurs des caractéristiques suivantes, prises seules ou en combinaison.

Les moyens de régulation du débit d'air peuvent comprendre des obturateurs de conduites d'air.

L'unité de contrôle peut être configurée pour diminuer le débit d'air prélevé lorsque la vitesse du véhicule augmente.

L'unité de contrôle peut être configurée pour couper le débit d'air prélevé lorsque la vitesse dépasse un seuil prédéterminé.

L'unité de contrôle peut être configurée pour modifier le débit d'air prélevé par le générateur de mousse en fonction d'un état de propreté détecté de la vitre après un premier cycle de nettoyage de ladite vitre.

Le dispositif peut comporter en outre une caméra optique dirigée sur la vitre du véhicule pour la détection de l'état de propreté de la vitre.

L'unité de contrôle peut être configurée pour détecter des utilisations successives et rapprochées du dispositif correspondant à un nettoyage insuffisant et pour changer débit d'air prélevé par le générateur de mousse en réponse.

Le générateur de mousse peut comporter deux entrées d'air, l'une aspirant de l'air chauffé, et l'autre aspirant de l'air extérieur, et un clapet contrôlé par l'unité de contrôle de sorte qu'une proportion contrôlée d'air de chacune des entrées d'air est mélangé au liquide de nettoyage dans le générateur de mousse.

L'unité de contrôle peut être reliée à un thermomètre mesurant la température de l'air aspiré, et configurée pour augmenter la proportion d'air issue de l'entrée d'air chauffé lorsqu'une température basse est détectée.

L'unité de contrôle peut être configurée pour adapter le débit d'air prélevé par le générateur de mousse en fonction de la phase d'un cycle de balayage des balais d'essuie-glace.

L'unité de contrôle peut être configurée pour augmenter ou diminuer le débit d'air lorsque les balais d'essuie-glace atteignent des angles spécifiques lors du balayage.

Le dispositif peut comporter en outre un détecteur de composition du liquide de nettoyage, configuré pour identifier au moins un composant dudit liquide et estimer la proportion du liquide de nettoyage que représente ledit composant, et en ce que l'unité de contrôle est configurée pour adapter le débit d'air prélevé par le générateur de mousse en fonction de la présence et/ou de la proportion dudit composant.

Le détecteur de composition peut comporter un détecteur optique, un détecteur de viscosité, ou un détecteur capacitif.

Le dispositif peut en outre comporter :
- un réservoir de liquide de nettoyage, configuré pour contenir un volume de liquide de nettoyage,
- une pompe de liquide de nettoyage, configurée pour mettre en mouvement le liquide de nettoyage à partir du réservoir,
- au moins une buse de distribution de liquide de nettoyage sur au moins une portion d'une vitre de véhicule, configurée pour être disposée dans un balai d'essuie-glace du véhicule,
- des conduites de fluide, guidant le liquide de nettoyage du réservoir vers l'au moins une buse de distribution.

D'autres caractéristiques et avantages de l'invention apparaîtront plus clairement à la lecture de la description suivante, donnée à titre d'exemple illustratif et non limitatif, et des dessins annexés parmi lesquels :
[Fig. 1] est une représentation schématique d'un pare-brise et du dispositif de nettoyage associé,
[Fig. 2] est un graphe de la proportion d'air ajoutée en fonction de la vitesse de circulation,
[Fig. 3] est une représentation schématique d'un générateur de mousse à deux entrées d'air,
[Fig. 4] est un graphe de la proportion d'air ajoutée en fonction de la température pour le mode de réalisation de la figure 3,
[Fig. 5] est un organigramme linéaire reprenant les étapes d'un mode de régulation du débit d'air,
[Fig. 6] est une représentation schématique d'une vitre sur laquelle un détecteur optique de niveau de propreté est dirigé,
[Fig. 7]

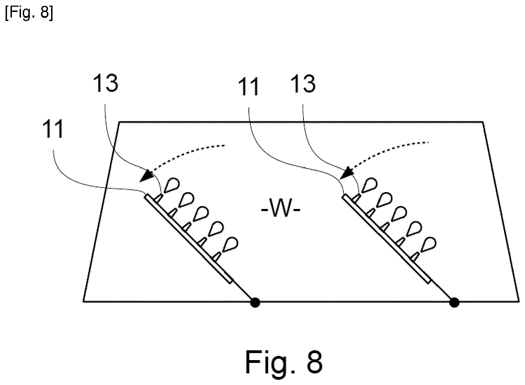

et [Fig. 8] sont des représentations schématiques d'une vitre avec les balais d'essuie-glace à différentes phases de leur cycle de balayage,

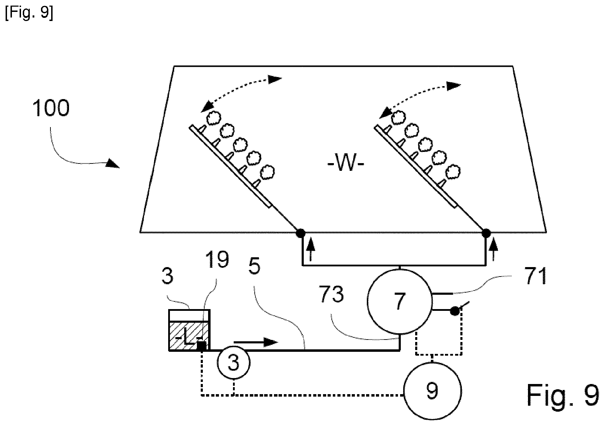

[Fig. 9] est une représentation schématique d'un dispositif de nettoyage comportant un détecteur de composants du liquide de nettoyage.

Sur toutes les figures, les mêmes références se rapportent aux mêmes éléments. Les réalisations décrites en faisant référence aux figures sont des exemples.

Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres modes de réalisation.

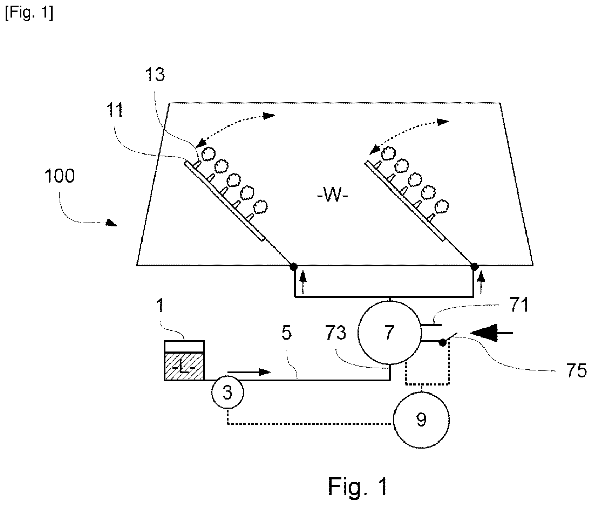

La figure 1 illustre un dispositif de nettoyage 100 selon un premier mode de réalisation de l'invention.

Le dispositif de nettoyage 100 de la figure 1 comporte un réservoir 1 de liquide de nettoyage pour contenir un volume de liquide de nettoyage L. Le liquide de nettoyage L est par exemple un liquide de nettoyage à base d'eau, additionnée de surfactants, de solvants et/ou de liquides antigel.

Une pompe 3 met en mouvement le liquide de nettoyage L à partir du réservoir 1, et l'injecte dans des conduites 5 reliées à la pompe 3 et au réservoir 1.

Les conduites 5 acheminent le liquide de nettoyage vers un générateur de mousse 7.

Le générateur de mousse 7 comporte deux entrées 71, 73, avec une entrée d'air 71 et une entrée de fluide 73.

Les conduites 5 acheminent en particulier le liquide de nettoyage L jusqu'à l'entrée de fluide 73. Une seule conduite 5 est représentée en figure 1, mais des modes de réalisation à plusieurs conduites parallèles sont possibles. L'entrée d'air 71 aspire de l'air, par entraînement Venturi avec la circulation du liquide de nettoyage L ou du fait d'une pompe dédiée. L'air et le liquide sont alors mélangés dans une ou plusieurs structures ou chambres de mélange (non représentées) pour former une mousse.

L'entrée d'air 71 du générateur de mousse 7 comporte des moyens de régulation de débit 75, par exemple un clapet ou obturateur. Selon une alternative, les moyens de régulation du débit 75 peuvent comporter une pompe d'air à débit régulé.

Une unité de contrôle 9 contrôle les moyens de régulation de débit 75, le fonctionnement de la pompe 3 et du générateur de mousse 7. L'unité de contrôle 9 comporte notamment des moyens de calcul, avec une mémoire programmée ou programmable. L'unité de contrôle 9, et en particulier ses moyens de calcul et sa mémoire peuvent soit être sous forme d'unité dédiée, soit intégrés dans une électronique de bord du véhicule.

Partant du générateur de mousse 7, la mousse est dirigée par les conduites 5 vers des balais d'essuie-glace 11 qui comportent des buses 13. Le liquide de nettoyage L, partiellement ou complètement sous forme de mousse est alors projeté via les buses 13 contre le pare-brise W du véhicule. Une autre vitre ou surface vitrée du véhicule peut remplacer le pare-brise W. Par exemple le dispositif de nettoyage 100 peut être disposé au niveau d'une vitre arrière du véhicule.

En ajustant le débit d'air et le débit de liquide dans le générateur de mousse 7, l'unité de contrôle 9 peut modifier la portion de mousse et ses propriétés au niveau des buses 13 et du pare-brise W (ratio liquide/mousse, densité et diamètre des bulles etc.).

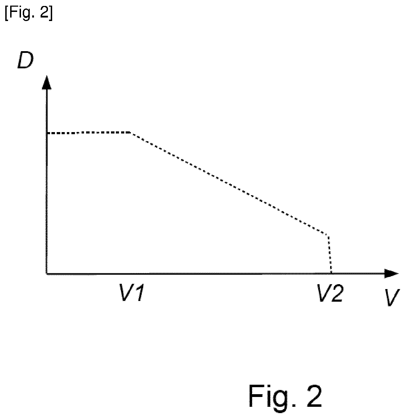

La figure 2 est un graphe illustrant le débit d'air D entrant dans le générateur de mousse 7 et donc indirectement de la portion de mousse projetée sur le pare-brise W en fonction de la vitesse de déplacement du véhicule V.

L'axe horizontal correspond à la vitesse V du véhicule (en km.h⁻¹) et l'axe vertical correspond à un débit d'air D (ou une portion de mousse) mélangé dans le liquide L projeté contre le pare-brise W en L.s⁻¹ (ou en pourcentage de mousse).

La portion de mousse est importante à vitesse réduite. Comme mentionné plus haut, la mousse permet d'économiser du liquide de nettoyage L. Pour des vitesses relativement basses, par exemple inférieures à une première vitesse V1 de 30 ou 40 km.h⁻¹, la portion de mousse est constante, correspondant par exemple à un optimum de potentiel de nettoyage. Lorsque la vitesse du véhicule dépasse ladite première vitesse V1, la portion de mousse décroît progressivement, jusqu'à une deuxième vitesse V2, par exemple de 90 ou 100km.h⁻¹, où elle devient nulle.

L'unité de contrôle 9 est pour ce faire programmée pour diminuer le débit d'air lorsque la vitesse augmente, et pour couper le débit d'air au-delà de la deuxième vitesse V2.

La mousse étant plus susceptible d'être entraînée par le flux d'air environnant que le liquide, la diminution du débit d'air et/ou de la portion de mousse à grande vitesse permet d'éviter un entraînement massif du liquide de nettoyage sous forme de mousse.

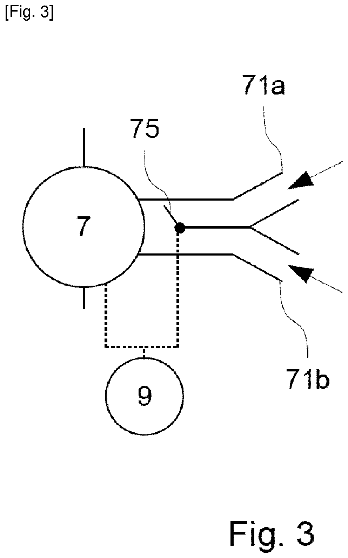

La figure 3 est une représentation schématique partielle d'un mode de réalisation alternatif de dispositif de nettoyage 100, notamment de son générateur de mousse 7 et de son unité de contrôle 9.

En figure 3 le dispositif de nettoyage 100 représenté comporte un générateur de mousse 7 ayant deux entrées d'air 71a, 71b.

Une des entrées d'air 71a est reliée à une prise d'air extérieur, l'autre entrée d'air 71b est reliée à une prise d'air chauffé, par exemple par circulation autour d'un échangeur de chaleur du moteur du véhicule, ou dans le compartiment moteur. En alternative ou en complément, un dispositif de chauffage dédié peut chauffer l'air.

Un sélecteur 75, ici sous forme d'un volet basculant, permet de modifier le ratio entre air extérieur de la première entrée d'air 71a et air réchauffé provenant de la deuxième entrée d'air 71b, en obturant plus ou moins les conduites d'air 71a, 71b.

L'unité de contrôle 9 est pour cela reliée à un capteur thermique (non représenté), qui peut être dédié ou partagé, par exemple avec une interface d'habitacle indiquant les températures extérieures et intérieures. Le capteur thermique évalue la température extérieure.

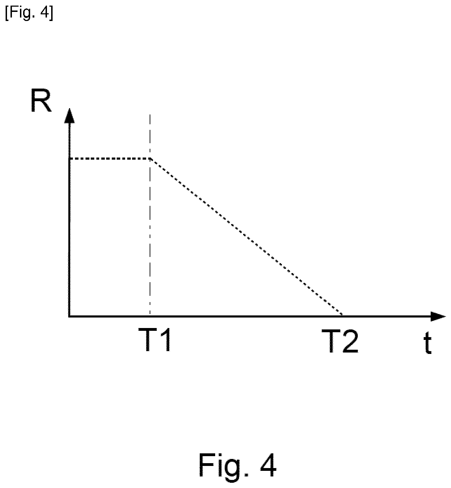

La figure 4 est un graphe illustrant le ratio R air extérieur/air réchauffé en fonction de la température extérieure t.

Si la température extérieure est basse, en particulier inférieures à une température basse T1, l'unité de contrôle 9 actionne le sélectionneur de sorte à ce que l'air entrant dans le générateur de mousse 7 contienne une portion importante d'air chauffé par exemple supérieure à 70%du débit total, notamment exclusivement de l'air chauffé.

La température basse T1 correspond par exemple à la température de gel du liquide L. L'apport de chaleur par l'air chauffé sert à empêcher un gel immédiat dudit liquide L sur le pare-brise W.

Lorsque la température dépasse la température basse T1 tout en étant inférieure à une température haute T2, l'unité de contrôle 9 actionne le sélecteur 75 de sorte à ce que la portion d'air chauffé diminue lorsque la température passe de T1 à T2, par exemple de façon linéaire.

Lorsque la température haute T2 est atteinte, la portion d'air chauffé est minimale voire nulle. Dans les températures supérieures à la température haute T2, la portion d'air chauffé demeure minimale voire nulle.

Le débit d'air peut en alternative ou en complément être ajusté lorsqu'un nettoyage insuffisant est détecté après un premier cycle de nettoyage. Par cycle de nettoyage, on entend ici une projection de liquide accompagnée d'une série de cycles de balayage par les balais d'essuie-glace 11.

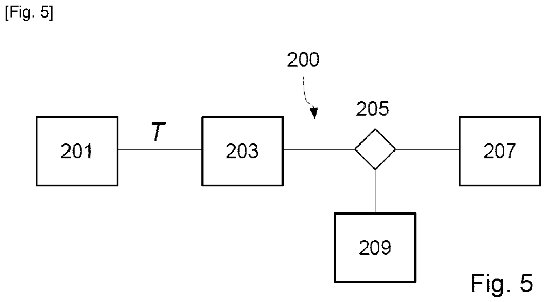

La figure 5 est un organigramme linéaire illustrant une méthode 200 de détection d'une insuffisance de nettoyage.

La première étape 201 de la méthode est un premier actionnement manuel du dispositif de nettoyage 100 par un utilisateur. La deuxième étape 203 est un deuxième actionnement manuel du dispositif de nettoyage 100. Ce deuxième actionnement a lieu après une durée T à partir du premier actionnement 201.

Pour déterminer la qualité du nettoyage, l'unité de contrôle 9 compare lors d'une troisième étape 205 la durée T entre les actionnements manuels avec une durée de référence T0, par exemple de 10 à 15 secondes.

Si la durée T est supérieure à la durée de référence T0, l'unité de contrôle 9 maintient, lors d'une quatrième étape 207 le débit d'air à sa valeur utilisée.

Si la durée T est inférieure à la durée de référence T0, l'unité de contrôle 9 modifiera, lors d'une cinquième étape 209 le débit d'air, par exemple en le diminuant, pour qu'une portion du liquide L arrive sur le pare-brise W sous forme liquide.

En effet, deux actionnements rapprochés signifient généralement que la propreté atteinte lors du premier actionnement était insuffisante. Si les actionnements successifs sont en revanche éloignés, cela signifie généralement qu'ils correspondent à deux nettoyages séparés.

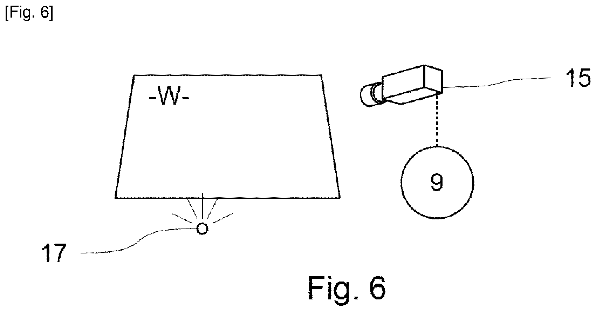

La figure 6 est une représentation schématique d'un dispositif de mesure de propreté pour dispositif de nettoyage 100 selon un mode de réalisation particulier, alternatif ou complémentaire du précédent.

Le dispositif de mesure de propreté comporte une caméra 15, notamment une caméra infrarouge, dirigée vers le pare-brise W, et reliée à l'unité de contrôle 9. Une diode 17 éclaire le pare-brise W dans le domaine infrarouge.

La caméra 15 peut notamment être intégrée dans le plafond du véhicule, dans le rétroviseur ou dans un plafonnier éclairant. La diode 17 peut notamment être disposée au niveau de la planche de bord du véhicule.

La lumière infrarouge de la diode 17 traverse le pare-brise lorsqu'il est propre et transparent, et est diffusée par les salissures. En évaluant l'intensité lumineuse diffusée par les salissures et captée par la caméra 15, l'unité de contrôle 9 peut donc estimer le niveau de propreté du pare-brise W.

Si une différence suffisante de luminosité est constatée entre avant et après un nettoyage, l'unité de contrôle 9 maintient le débit d'air entrant dans le générateur de mousse 7. A l'inverse, si la différence est insuffisante, le débit d'air entrant est modifié.

Le débit d'air peut aussi être ajusté en fonction de la phase du cycle de balayage des essuie-glaces 11.

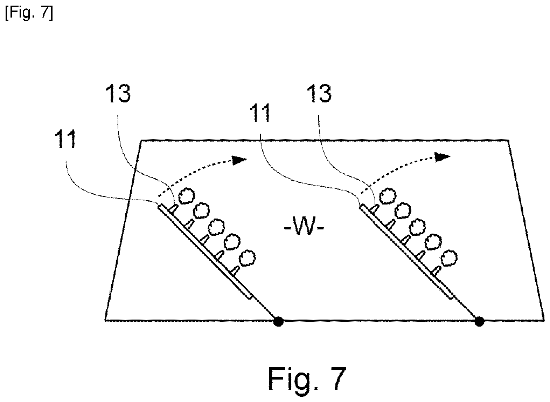

Les figures 7 et 8 illustrent par exemple un tel fonctionnement.

Les figures 7 et 8 sont une représentation schématique du pare-brise W, avec les balais d'essuie-glace 11 portant les buses 13 orientées vers le haut du pare-brise W.

En figure 7, les balais d'essuie-glace 11 sont dans une phase montante. L'unité de contrôle 9 (non représentée en figure 7) est alors configurée pour injecter de l'air dans le générateur de mousse 7. Le liquide L est alors projeté contre le pare-brise sous forme de mousse.

L'entraînement de la mousse par la circulation d'air due au déplacement du véhicule et l'entraînement par les balais 11 sont alors dans le même sens, de sorte que la stagnation de mousse (qui réduit la visibilité) est évitée.

En alternative ou en complément, le débit d'air peut être réduit et augmenté lorsque des angles prédéterminés des balais 11 sont atteints; Il est alors possible de réduire le volume de liquide passant par-dessus ou au-delà de l'extrémité des balais 11.

En figure 8 les balais d'essuie-glace 11 sont dans une phase descendante. L'unité de contrôle 9 (non représentée en figure 7) est alors configurée pour couper l'injection d'air dans le générateur de mousse 7. Le liquide L est alors projeté contre le pare-brise sous forme liquide.

En effet, lors de la phase descendante, l'entraînement par l'air autour du véhicule en mouvement contribue à étaler le liquide L sur le pare-brise W. A l'état de mousse, le liquide L ainsi étalé réduirait la visibilité, et serait plus susceptible à l'entraînement.

La figure 9 est une représentation schématique de dispositif de nettoyage 100 semblable à la figure 1.

Le dispositif 100 de la figure 8 comporte un détecteur de composition 19 du liquide de nettoyage L, ici positionné dans le réservoir 1 de liquide de nettoyage L. Selon des modes de réalisation alternatifs, le détecteur de composition peut être disposé au niveau des conduites 5.

Le détecteur de composition 19 est par exemple un détecteur optique, un détecteur de viscosité, ou un détecteur capacitif.

Le détecteur de composition 19 est configuré pour identifier au moins un composant et estimer la proportion du liquide de nettoyage L que représente ledit composant. L'unité de contrôle 9 est alors configurée pour adapter le débit d'air prélevé par le générateur de mousse en fonction de la présence et/ou de la proportion dudit composant.

Par exemple, le détecteur de composition 19 peut détecter la portion du liquide de nettoyage L que représente le méthanol. Si ladite portion est supérieure à 10 ou 15% du liquide de nettoyage L, l'unité de contrôle 9 peut alors couper le débit d'air, afin d'utiliser le liquide de nettoyage L pur et liquide sur le pare-brise W.

Selon un autre mode de réalisation, le détecteur de composition 19 peut être configuré pour rechercher des compositions spécifiques, caractéristiques de liquides de nettoyage spécialisés (anti-insecte, dégraissant, etc.) qui sont avantageusement à utiliser purs et liquides. Si un liquide de nettoyage L spécialisé est détecté, l'unité de contrôle 9 peut alors couper le débit d'air.

En adaptant le débit d'air entrant dans le générateur de mousse 7, il est possible d'adapter la portion de mousse du liquide de nettoyage L projeté sur le pare-brise W selon divers paramètres.

## Revendications

1. Dispositif de nettoyage de vitre de véhicule, comportant :
- un générateur de mousse (7), configuré pour prélever de l'air et un liquide de nettoyage (L) et mélanger l'air et le liquide de nettoyage (L) et les transformer au moins partiellement en mousse,
- des moyens de régulation (75) du débit d'air prélevé par le générateur de mousse (7),
- une unité de contrôle (9) configurée pour piloter les moyens de régulation (75) du débit d'air en fonction d'au moins un paramètre, **caractérisé en ce que** les moyens de régulation (75) du débit d'air comportent une pompe à débit contrôlé.

2. Dispositif selon la revendication 1, **caractérisé en ce que** les moyens de régulation (75) du débit d'air comprennent des obturateurs de conduites d'air.

3. Dispositif selon la revendication 1 ou 2, **caractérisé en ce que** l'unité de contrôle (9) est configurée pour diminuer le débit d'air prélevé lorsque la vitesse du véhicule augmente.

4. Dispositif selon la revendication 3, **caractérisé en ce que** l'unité de contrôle (9) est configurée pour couper le débit d'air prélevé lorsque la vitesse dépasse un seuil prédéterminé.

5. Dispositif selon l'une des revendications précédentes, **caractérisé en ce que** l'unité de contrôle est configurée pour modifier le débit d'air prélevé par le générateur de mousse en fonction d'un état de propreté détecté de la vitre après un premier cycle de nettoyage de ladite vitre.

6. Dispositif selon la revendication 5, **caractérisé en ce qu'**il comporte en outre une caméra optique (15) dirigée sur la vitre (W) du véhicule pour la détection de l'état de propreté de la vitre (W).

7. Dispositif selon la revendication 5 ou 6, **caractérisé en ce que** l'unité de contrôle (9) est configurée pour détecter des utilisations successives et rapprochées du dispositif correspondant à un nettoyage insuffisant et pour changer débit d'air prélevé par le générateur de mousse (7) en réponse.

8. Dispositif selon l'une des revendications précédentes, **caractérisé en ce que** le générateur de mousse (7) comporte deux entrées d'air (71a, 71b), l'une (71b) aspirant de l'air chauffé, et l'autre (71a) aspirant de l'air extérieur, et un clapet (75) contrôlé par l'unité de contrôle de sorte qu'une proportion contrôlée d'air de chacune des entrées d'air (71a, 71b) est mélangé au liquide de nettoyage (L) dans le générateur de mousse (7).

9. Dispositif selon la revendication 8, dans lequel l'unité de contrôle (9) est reliée à un thermomètre mesurant la température de l'air aspiré, **caractérisé en ce que** l'unité de contrôle (9) est configurée pour augmenter la proportion d'air issue de l'entrée d'air (71b) chauffé lorsqu'une température basse est détectée.

10. Dispositif selon l'une des revendications précédentes, **caractérisé en ce que** l'unité de contrôle (9) est configurée pour adapter le débit d'air prélevé par le générateur de mousse (7) en fonction de la phase d'un cycle de balayage des balais d'essuie-glace (11).

11. Dispositif selon la revendication 10, **caractérisé en ce que** l'unité de contrôle est configurée pour augmenter ou diminuer le débit d'air lorsque les balais d'essuie-glace (11) atteignent des angles spécifiques lors du balayage.

12. Dispositif selon l'une des revendications précédentes, **caractérisé en ce qu'**il comporte en outre un détecteur (19) de composition du liquide de nettoyage (L), configuré pour identifier au moins un composant dudit liquide et estimer la proportion du liquide de nettoyage (L) que représente ledit composant, et **en ce que** l'unité de contrôle(9) est configurée pour adapter le débit d'air prélevé par le générateur de mousse en fonction de la présence et/ou de la proportion dudit composant.

13. Dispositif selon la revendication 12, **caractérisé en ce que** le détecteur de composition (19) comporte un détecteur optique, un détecteur de viscosité, ou un détecteur capacitif.

14. Dispositif selon l'une des revendications précédentes, **caractérisé en ce qu'**il comporte en outre:
- un réservoir de liquide de nettoyage (1), configuré pour contenir un volume de liquide de nettoyage (L),
- une pompe de liquide de nettoyage (3), configurée pour mettre en mouvement le liquide de nettoyage (L) à partir du réservoir (1),
- au moins une buse de distribution (13) de liquide de nettoyage sur au moins une portion d'une vitre de véhicule (W), configurée pour être disposée dans un balai d'essuie-glace (11) du véhicule,
- des conduites de fluide (5), guidant le liquide de nettoyage (L) du réservoir (1) vers l'au moins une buse de distribution (13).

## Patentansprüche

1. Glasreinigungsvorrichtung für ein Fahrzeug, die Folgendes umfasst:
- einen Schaumerzeuger (7), der dazu konfiguriert ist, Luft und eine Reinigungsflüssigkeit (L) zuzuführen und die Luft und die Reinigungsflüssigkeit (L) zu mischen und mindestens teilweise in Schaum umzuwandeln,
- Mittel zur Regulierung (75) der durch den Schaumerzeuger (7) zugeführten Luftmenge,
- eine Steuereinheit (9), die dazu konfiguriert ist, die Mittel zur Regulierung (75) der Luftmenge in Abhängigkeit von mindestens einem Parameter anzusteuern, **dadurch gekennzeichnet, dass** die Mittel zur Regulierung (75) der Luftmenge eine Pumpe mit gesteuertem Durchfluss umfassen.

2. Vorrichtung nach Anspruch 1, **dadurch gekennzeichnet, dass** die Mittel zur Regulierung (75) der Luftmenge Absperrorgane für Luftleitungen beinhalten.

3. Vorrichtung nach Anspruch 1 oder 2, **dadurch gekennzeichnet, dass** die Steuereinheit (9) dazu konfiguriert ist, die zugeführte Luftmenge zu verringern, wenn die Geschwindigkeit des Fahrzeugs zunimmt.

4. Vorrichtung nach Anspruch 3, **dadurch gekennzeichnet, dass** die Steuereinheit (9) dazu konfiguriert ist, die Luftzufuhr zu unterbrechen, wenn die Geschwindigkeit einen vorgegebenen Schwellenwert überschreitet.

5. Vorrichtung nach einem der vorhergehenden Ansprüche, **dadurch gekennzeichnet, dass** die Steuereinheit dazu konfiguriert ist, die durch den Schaumerzeuger zugeführte Luftmenge in Abhängigkeit von einem Sauberkeitszustand zu modifizieren, der nach einem ersten Reinigungszyklus des Glases an dem Glas detektiert wird.

6. Vorrichtung nach Anspruch 5, **dadurch gekennzeichnet, dass** sie ferner eine optische Kamera (15) umfasst, die auf das Glas (W) des Fahrzeugs gerichtet ist, um den Sauberkeitszustand des Glases (W) zu detektieren.

7. Vorrichtung nach Anspruch 5 oder 6, **dadurch gekennzeichnet, dass** die Steuereinheit (9) dazu konfiguriert ist, schnell aufeinanderfolgende Verwendungen der Vorrichtung, die einer unzureichenden Reinigung entsprechen, zu detektieren und als Reaktion darauf die durch den Schaumerzeuger (7) zugeführte Luftmenge zu ändern.

8. Vorrichtung nach einem der vorhergehenden Ansprüche, **dadurch gekennzeichnet, dass** der Schaumerzeuger (7) zwei Lufteinlässe (71a, 71b), von denen der eine (71b) erwärmte Luft ansaugt und der andere (71a) Außenluft ansaugt, und ein Ventil (75), das von der Steuereinheit so gesteuert wird, dass in dem Schaumerzeuger (7) ein gesteuerter Anteil von Luft von jedem der Lufteinlässe (71a, 71b) mit der Reinigungsflüssigkeit (L) gemischt wird, umfasst.

9. Vorrichtung nach Anspruch 8, wobei die Steuereinheit (9) mit einem Thermometer verbunden ist, das die Temperatur der angesaugten Luft misst, **dadurch gekennzeichnet, dass** die Steuereinheit (9) dazu konfiguriert ist, den Luftanteil aus dem Einlass (71b) für erwärmte Luft zu erhöhen, wenn eine niedrige Temperatur detektiert wird.

10. Vorrichtung nach einem der vorhergehenden Ansprüche, **dadurch gekennzeichnet, dass** die Steuereinheit (9) dazu konfiguriert ist, die durch den Schaumerzeuger (7) zugeführte Luftmenge in Abhängigkeit von der Phase eines Wischzyklus der Scheibenwischerblätter (11) anzupassen.

11. Vorrichtung nach Anspruch 10, **dadurch gekennzeichnet, dass** die Steuereinheit dazu konfiguriert ist, die Luftmenge zu erhöhen oder zu verringern, wenn die Scheibenwischerblätter (11) während des Wischens bestimmte Winkel erreichen.

12. Vorrichtung nach einem der vorhergehenden Ansprüche, **dadurch gekennzeichnet, dass** sie ferner einen Sensor (19) zur Detektion der Zusammensetzung der Reinigungsflüssigkeit (L) umfasst, der dazu konfiguriert ist, mindestens einen Bestandteil der Flüssigkeit zu identifizieren und den Anteil an der Reinigungsflüssigkeit (L), den dieser Bestandteil ausmacht, zu ermitteln, und dass die Steuereinheit (9) dazu konfiguriert ist, die durch den Schaumerzeuger zugeführte Luftmenge in Abhängigkeit von dem Vorhandensein und/oder dem Anteil des Bestandteils anzupassen.

13. Vorrichtung nach Anspruch 12, **dadurch gekennzeichnet, dass** der Sensor (19) zur Detektion der Zusammensetzung einen optischen Sensor, einen Viskositätssensor oder einen kapazitiven Sensor umfasst.

14. Vorrichtung nach einem der vorhergehenden Ansprüche, **dadurch gekennzeichnet, dass** sie ferner Folgendes umfasst:
- einen Reinigungsflüssigkeitsbehälter (1), der dazu konfiguriert ist, ein Volumen einer Reinigungsflüssigkeit (L) aufzunehmen,
- eine Reinigungsflüssigkeitspumpe (3), die dazu konfiguriert ist, die Reinigungsflüssigkeit (L) ausgehend von dem Behälter (1) in Bewegung zu versetzen,
- mindestens eine Düse (13) zur Verteilung von Reinigungsflüssigkeit auf mindestens einem Teil eines Glases eines Fahrzeugs (W), die dazu konfiguriert ist, in einem Scheibenwischerblatt (11) des Fahrzeugs angeordnet zu sein,
- Fluidleitungen (5), die die Reinigungsflüssigkeit (L) von dem Behälter (1) zu der mindestens einen Verteilungsdüse (13) leiten.

## Claims

1. Device for cleaning a vehicle window, comprising:
- a foam generator (7), configured to draw in air and a cleaning fluid (L) and mix the air and the cleaning fluid (L) and at least partially convert them into a foam,
- regulating means (75) for regulating the air flow drawn in by the foam generator (7),
- a control unit (9) configured to control the air flow regulating means (75) on the basis of at least one parameter, **characterized in that** the air flow regulating means (75) comprise a controlled-delivery pump.

2. Device according to Claim 1, **characterized in that** the air flow regulating means (75) comprise air duct shutters.

3. Device according to Claim 1 or 2, **characterized in that** the control unit (9) is configured to reduce the air flow drawn in as the speed of the vehicle increases.

4. Device according to Claim 3, **characterized in that** the control unit (9) is configured to cut off the air flow drawn in when the speed exceeds a predetermined threshold.

5. Device according to one of the preceding claims, **characterized in that** the control unit is configured to modify the air flow drawn in by the foam generator on the basis of a state of cleanliness of the window that is detected after a first cycle of cleaning of said window.

6. Device according to Claim 5, **characterized in that** it further comprises an optical camera (15) directed onto the window (W) of the vehicle in order to detect the state of cleanliness of the window (W).

7. Device according to Claim 5 or 6, **characterized in that** the control unit (9) is configured to detect successive and closely-spaced uses of the device corresponding to insufficient cleaning, and to change the air flow drawn in by the foam generator (7) in response.

8. Device according to one of the preceding claims, **characterized in that** the foam generator (7) comprises two air inlets (71a, 71b), one (71b) admitting heated air, and the other (71a) admitting exterior air, and a valve (75) controlled by the control unit so that a controlled proportion of air from each of the air inlets (71a, 71b) is mixed with the cleaning fluid (L) in the foam generator (7).

9. Device according to Claim 8 wherein the control unit (9) is connected to a thermometer that measures the temperature of the intake air, **characterized in that** the control unit (9) is configured to increase the proportion of air derived from the heated-air inlet (71b) when a low temperature is detected.

10. Device according to one of the preceding claims, **characterized in that** the control unit (9) is configured to adapt the air flow drawn in by the foam generator (7) on the basis of the phase of a windscreen wiper (11) sweep cycle.

11. Device according to Claim 10, **characterized in that** the control unit is configured to increase or decrease the air flow when the windscreen wipers (11) reach specific angles in the sweep.

12. Device according to one of the preceding claims, **characterized in that** it further comprises a composition detector (19) detecting the composition of the cleaning fluid (L), and configured to identify at least one component of said fluid and estimate the proportion of the cleaning fluid (L) that said component represents, and **in that** the control unit (9) is configured to adapt the air flow drawn in by the foam generator on the basis of the presence and/or of the proportion of said component.

13. Device according to Claim 12, **characterized in that** the composition detector (19) comprises an optical detector, a viscosity detector, or a capacitive detector.

14. Device according to one of the preceding claims, **characterized in that** it further comprises:
- a reservoir (1) of cleaning fluid, configured to contain a volume of cleaning fluid (L),
- a cleaning-fluid pump (3), configured to displace the cleaning fluid (L) from the reservoir (1),
- at least one distribution nozzle (13) distributing cleaning fluid over at least a portion of a vehicle window (W), and configured to be arranged in a windscreen wiper (11) of the vehicle,
- fluid ducts (5), guiding the cleaning fluid (L) from the reservoir (1) towards the at least one distribution nozzle (13).
